# EUROPEAN PATENT SPECIFICATION

(11) **EP 3 186 305 B1**
(45) Date of publication and mention of the grant of the patent: **07.04.2021**
(21) Application number: 15750568.6
(22) Date of filing: 06.08.2015
(51) Int. Cl.: C08J 9/00, C08L 23/06, H01B 13/14, H01B 3/44, B29C 44/34

(54) **FOAMED PEROXIDE MODIFIED LINEAR LOW DENSITY POLYETHYLENE COMPOSITIONS AND METHODS FOR MAKING FOAMED COMPOSITIONS THEREOF**
ZUSAMMENSETZUNGEN AUS EINEM DURCH GESCHÄUMTES PEROXID MODIFIZIERTEN LINEAREN POLYETHYLEN MIT NIEDRIGER DICHTE UND VERFAHREN ZUR HERSTELLUNG VON GESCHÄUMTEN ZUSAMMENSETZUNGEN DARAUS
COMPOSITIONS DE POLYÉTHYLÈNE BASSE DENSITÉ LINÉAIRE MODIFIÉ PAR UN PEROXYDE EXPANSÉ ET PROCÉDÉS DE FABRICATION DES COMPOSITIONS EXPANSÉES CORRESPONDANTES

(30) Priority: 28.08.2014 US 201462042992 P
(43) Date of publication of application: 05.07.2017
(73) Proprietor: Dow Global Technologies LLC, Midland, MI 48674 (US)
(72) Inventor: PUJARI, Saswati, Collegeville, PA 19426 (US); KMIEC, Chester J., Collegeville, PA 19426 (US)
(74) Representative: Boult Wade Tennant LLP
(86) International application number: PCT/US2015/043908
(87) International publication number: WO 2016/032715

(56) References cited:
- EP-A1- 1 354 912
- EP-A2- 0 181 637
- WO-A1-2007/071274
- US-A- 5 530 072
- US-A- 5 922 778

## Description

### REFERENCE TO RELATED APPLICATIONS

The present application claims the benefit of U.S. Provisional Application No. 62/042,992, filed on August 28, 2014.

### FIELD

Various embodiments of the present invention relate to a cable composition comprising a foamable polymeric composition comprising a peroxide-modified linear low-density polyethylene and a blowing agent.

### INTRODUCTION

WO 2007/071274 describes an electric cable.

EP 0,181,637 describes lightly crosslinked linear olefinic polymer foams.

US 5,922,778 describes rotational molding compositions.

US 5,530,072 describes introduction of long chain branching into linear polyethylenes.

EP 1,354,912 describes silane-crosslinking expandable olefinic resin composition and crosslinked foam.

A common trend in the power and communications industry involves efforts to lower the weight of infrastructure components, such as wire and cable components. "Light weighting" of components allows for greater capacity and easier installation. Communication and power cables typically include an inner layer, which comprises a conducting element (such as a metal wire or glass fiber) and one or more outer layers for shielding and protective purposes. The outer layers of cables generally comprise a polymeric material, such as polyethylene. The outermost layer, mainly providing protection, is usually referred to as a jacket or sheath.

One way to decrease the weight of cable jacketing is to introduce low levels of foaming into the jacket. However, foaming of polymeric materials tends to adversely impact the polymer's mechanical properties, particularly a polymer's tensile elongation. The void-space cells in the foamed polymer can act as defect sites, which lead to quick failure under elongation deformation. Accordingly, improvements are desired in foamed polymeric materials.

### SUMMARY

One embodiment is a cable composition as defined in the claims as appended hereto.

Yet another embodiment is a method for preparing a cable composition as defined in claim 6 as appended hereto.

### DETAILED DESCRIPTION

Various embodiments of the present invention concern foamable polymeric compositions comprising a peroxide-modified linear low-density polyethylene ("LLDPE") and a blowing agent. The peroxide-modified LLDPE is the reaction product of a peroxide and an LLDPE. Also described are foamed polymeric compositions prepared from such foamable polymeric compositions. Also described are methods for making foamed polymeric compositions.

### Linear Low-Density Polyethylene

As just noted, one component employed in preparing the foamable and foamed polymeric compositions described herein is a linear low-density polyethylene. LLDPEs are generally ethylene-based polymers having a heterogeneous distribution of comonomer and are characterized by short-chain branching. Additionally, as known to those skilled in the art, LLDPEs are characterized by a general lack of long-chain branching. Furthermore, LLDPEs typically have a narrow molecular weight distribution relative to some other types of polyethylene (e.g., low-density polyethylene, "LDPE"). LLDPEs are also known to be thermoplastic polymers. As known in the art, a "thermoplastic" polymer is one which becomes pliable or moldable above a specific temperature (known as the glass transition temperature) and returns to a solid state upon cooling below that temperature. Thermoplastic materials can be remelted and cooled time after time without undergoing any appreciable chemical change.

Comonomers suitable for use in preparing LLDPEs include alpha-olefin ("α-olefin") monomers. Thus, LLDPEs can be copolymers of ethylene and α-olefin monomers. In various embodiments, the α-olefin can be a C₃₋₂₀ (i.e., having 3 to 20 carbon atoms) linear, branched, or cyclic α-olefin. Examples of α-olefin monomers suitable for preparing the LLDPE include, but are not limited to, propene, 1-butene, 4-methyl-1-pentene, 1-hexene, 1-octene, 1-decene, 1-dodecene, 1-tetradecene, 1-hexadecene, and 1-octadecene. In one or more embodiments, the α-olefin monomer can be selected from the group consisting of 1-butene, 1-hexene, and 1-octene. In various embodiments, the α-olefin monomer is 1-butene.

LLDPEs suitable for use herein have an ethylene content of at least 50 weight percent ("wt%") based on the entire LLDPE weight. The α-olefin content of suitable LLDPEs can be at least 1 wt%, at least 5 wt%, at least 10 wt%, at least 15 wt%, at least 20 wt%, or at least 25 wt% based on the entire LLDPE weight. These LLDPEs can have an α-olefin content of less than 50 wt%, less than 45 wt%, less than 40 wt%, or less than 35 wt% based on the entire LLDPE weight. In such embodiments, the ethylene monomer can constitute the remainder of the LLDPE.

LLDPEs suitable for use herein have a density ranging from 0.916 to 0.925 g/cm³, or from 0.917 to 0.923 g/cm³. Polymer densities provided herein are determined according to ASTM International ("ASTM") method D792.

LLDPEs suitable for use herein can have a melt index (I₂) of less than 20 g/10 min., or ranging from 0.1 to 10 g/10 min., from 0.5 to 5 g/10 min., or from 0.5 to 3 g/10 min. Melt indices provided herein are determined according to ASTM method D1238. Unless otherwise noted, melt indices are determined at 190 °C and 2.16 Kg (i.e., I₂).

LLDPEs suitable for use herein can have a weight-average molecular weight ("Mw") (as measured by gel-permeation chromatography) of 100,000 to 130,000 g/mol. Furthermore, LLDPEs suitable for use herein can have a number-average molecular weight ("Mn") of 5,000 to 8,000 g/mol. Thus, in various embodiments, the LLDPE can have a molecular weight distribution (Mw/Mn, or polydispersity index ("PDI")) of 12.5 to 26.

LLDPEs suitable for use herein can be unimodal or multimodal polyethylenes. A "unimodal" polyethylene is one having a molecular weight distribution (measured by GPC) that does not substantially exhibit multiple component polymers, that is, no humps, shoulders, or tails exist or are substantially discernible in the GPC curve, and the degree of separation ("DOS") is zero or substantially close to zero. A "multimodal" polyethylene means that the MWD of the polyethylene in a GPC curve exhibits two or more component polymers, wherein one component polymer may even exist as a hump, shoulder, or tail relative to the MWD of the component polymer. A multimodal polyethylene can be prepared from one, two, or more different catalysts and/or under two or more different polymerization conditions. A multimodal polyethylene generally comprises at least a lower molecular weight ("LMW") component and a higher molecular weight ("HMW") component. Each component can be prepared using a different catalyst and/or different polymerization conditions. The prefix "multi" relates to the number of different polymer components present in the polymer. The multimodality (or bimodality) of the polyethylene can be determined according to known methods. Typically, the multimodal polyethylene is a bimodal polyethylene. In various embodiments, the LLDPE is unimodal.

Methods for preparing LLDPEs are generally known in the art. Typically, LLDPEs are prepared using either Ziegler or Philips catalysts, and polymerization can be performed in solution or gas-phase reactors. In various embodiments, the LLDPE employed in the foamable polymeric compositions described herein is produced in a gas-phase process.

Examples of suitable commercially available LLDPEs include, but are not limited to, DFDA-7530 NT, DFDA-7540 NT, and DFDK-6050 NT, available from The Dow Chemical Company, Midland, MI, USA.

The LLDPE can be present in the foamable polymeric composition in an amount of at least 50 wt%, at least 80 wt%, at least 90 wt%, at least 95 wt%, at least 97 wt%, or at least 98 wt% based on the combined weight of the LLDPE, the peroxide, and the blowing agent. In various embodiments, the LLDPE can be present in an amount ranging from 50 to 99.75 wt%, from 80 to 99.75 wt%, from 90 to 99.75 wt%, from 95 to 99.75 wt%, or from 98 to 99.75 wt%, based on the combined weight of the LLDPE, the peroxide, and the blowing agent.

### Peroxide

As noted above, a peroxide is employed to react with the above-described LLDPE to initially form a peroxide-modified LLDPE. In various embodiments, the peroxide employed in the foamable polymeric composition can be an organic peroxide. As used herein, "organic peroxide" denotes a peroxide having the structure: R¹-O-O-R², or R¹-O-O-R-O-O-R², where each of R¹ and R² is a hydrocarbyl moiety, and R is a hydrocarbylene moiety. As used herein, "hydrocarbyl" denotes a univalent group formed by removing a hydrogen atom from a hydrocarbon (e.g. ethyl, phenyl) optionally having one or more heteroatoms. As used herein, "hydrocarbylene" denotes a bivalent group formed by removing two hydrogen atoms from a hydrocarbon optionally having one or more heteroatoms. The organic peroxide can be any dialkyl, diaryl, dialkaryl, or diaralkyl peroxide, having the same or differing alkyl, aryl, alkaryl, or aralkyl moieties. In an embodiment, each of R¹ and R² is independently a C₁ to C₂₀ or C₁ to C₁₂ alkyl, aryl, alkaryl, or aralkyl moiety. In an embodiment, R can be a C₁ to C₂₀ or C₁ to C₁₂ alkylene, arylene, alkarylene, or aralkylene moiety. In various embodiments, R, R¹, and R² can have the same or a different number of carbon atoms and structure, or any two of R, R¹, and R² can have the same number of carbon atoms and structure while the third has a different number of carbon atoms and structure.

Organic peroxides suitable for use herein include mono-functional peroxides and di-functional peroxides. As used herein, "mono-functional peroxides" denote peroxides having a single pair of covalently bonded oxygen atoms (e.g., having a structure R-O-O-R). As used herein, "di-functional peroxides" denote peroxides having two pairs of covalently bonded oxygen atoms (e.g., having a structure R-O-O-R-O-O-R). In an embodiment, the organic peroxide is a di-functional peroxide.

Exemplary organic peroxides include dicumyl peroxide ("DCP"); tert-butyl peroxybenzoate; di-tert-amyl peroxide ("DTAP"); bis(alpha-t-butyl-peroxyisopropyl) benzene ("BIPB"); isopropylcumyl t-butyl peroxide; t-butylcumylperoxide; di-t-butyl peroxide; 2,5-bis(t-butylperoxy)-2,5-dimethylhexane; 2,5-bis(t-butylperoxy)-2,5-dimethylhexyne-3; 1,1-bis(t-butylperoxy)-3,3,5-trimethylcyclohexane; isopropylcumyl cumylperoxide; butyl 4,4-di(tert-butylperoxy) valerate; di(isopropylcumyl) peroxide; and mixtures of two or more thereof. In various embodiments, only a single type of organic peroxide is employed. In an embodiment, the organic peroxide is 2,5-bis(t-butylperoxy)-2,5-dimethylhexane. A commercially available 2,5-bis(t-butylperoxy)-2,5-dimethylhexane is sold under the trade name TRIGONOX™ 101 by Akzo Nobel N.V.

The amount of peroxide used to modify the LLDPE should be small enough to allow the LLDPE to remain a thermoplastic polymer. The peroxide is present in the foamable polymeric composition in an amount ranging from greater than 0 to less than 0.5 wt%, preferably from 0.05 to 0.2 wt%, or from 0.05 to 0.1 wt%, based on the combined weight of the LLDPE, the peroxide, and the blowing agent. Additionally, the peroxide can be present in the foamable polymeric composition in a mole fraction ranging from 0.013 to 0.427, based on the combined amount of peroxide and LLDPE.

### Blowing Agent

The blowing agent suitable for use in the foamable polymeric compositions described herein can be any known or hereafter discovered blowing agent. As known in the art, a "blowing agent" is any substance that is capable of forming a cellular structure (i.e., forming a plurality of void-space cells) in a matrix via a foaming process. As known in the art, blowing agents can be classified as either physical blowing agents (e.g., liquid carbon dioxide, hydrocarbons) or chemical blowing agents (e.g., azodicarbonamide ("azo"), hydrazine, sodium bicarbonate). Physical blowing agents are generally endothermic (i.e., requiring the addition of heat to the foaming process), while chemical blowing agents are typically exothermic. Either physical or chemical blowing agents can be employed in the foamable polymeric compositions described herein. In various embodiments, the blowing agent suitable for use in the foamable polymeric compositions described herein is an exothermic blowing agent.

The blowing agent can be selected from diazo alkanes, geminally single-substituted methylene groups, metallocarbenes, phosphazene azides, sulfonyl azides, formyl azides, and azides. Specific examples of suitable blowing agents include, but are not limited to azodicarbamide, p,p'-oxybis(benzenesulfonyl hydrazide) ("OBSH") poly(sulfonyl azides), including compounds such as 1,5-pentane bis(sulfonyl azide), 1,8-octane bis(sulfonyl azide), 1,10-decane bis(sulfonyl azide), 1,10-octadecane bis(sulfonyl azide), 1-octyl 2,4,6-benzene tris(sulfonyl azide), 4,4'-diphenyl ether bis(sulfonyl azide), 1,6-bis(4'sulfonazidophenyl)hexane, 2,7-naphthalene bis(sulfonyl azide), mixed sulfonyl azides of chlorinated aliphatic hydrocarbons containing an average of from 1 to 8 chlorine atoms and from 2 to 5 sulfonyl azide groups per molecule, oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl 2o azidophenyl)methane, and mixtures thereof. In various embodiments, the blowing agent can comprise azodicarbamide, OBSH, or combinations thereof.

The blowing agent can be present in the foamable polymeric composition in an amount ranging from greater than 0 to 1.5 wt%, from 0.05 to 1.5 wt%, from 0.05 to 0.75 wt%, from 0.1 to 0.75 wt%, or from 0.1 to 0.375 wt%, based on the combined weight of the LLDPE, the peroxide, and the blowing agent. Additionally, the blowing agent can be present in the foamable polymeric composition in a mole fraction ranging from 0.377 to 0.917, based on the combined amount of blowing agent and LLDPE.

### Additives

The foamable polymeric composition can optionally contain a non-conductive carbon black commonly used in cable jackets. The carbon black component can be compounded with the LLDPE and peroxide, as described above, either alone or as part of a pre-mixed masterbatch. In various embodiments, the amount of a carbon black in the composition can be greater than zero (>0), typically from 1, more typically from 2, up to 3, wt%, based on the total weight of the foamable polymeric composition. Non-limiting examples of conventional carbon blacks include the grades described by ASTM N550, N472, N351, N110 and N660, Ketjen blacks, furnace blacks, and acetylene blacks. Other non-limiting examples of suitable carbon blacks include those sold under the trade names CSX®, ELFTEX®, MOGUL®, MONARCH®, and REGAL®, available from Cabot.

The foamable polymeric composition can optionally contain one or more additional additives, which are generally added in conventional amounts, either neat or as part of a masterbatch. Such additives include, but are not limited to, flame retardants, processing aids, nucleating agents, fillers, pigments or colorants, coupling agents, antioxidants, ultraviolet stabilizers (including UV absorbers), tackifiers, antistatic agents, plasticizers, lubricants, viscosity control agents, anti-blocking agents, surfactants, extender oils, acid scavengers, metal deactivators, and the like.

Non-limiting examples of flame retardants include, but are not limited to, aluminum hydroxide and magnesium hydroxide.

Non-limiting examples of processing aids include, but are not limited to, polyethylene wax, oxidized polyethylene wax, polymers of ethylene oxide, copolymers of ethylene oxide and propylene oxide, vegetable waxes, petroleum waxes, non-ionic surfactants, and fluoroelastomers such as VITON®, available from Dupont Performance Elastomers LLC, or DYNAMAR™, available from Dyneon LLC.

A non-limiting example of a nucleating agent includes, but is not limited to, HYPERFORM® HPN-20E (1,2 cyclohexanedicarboxylic acid calcium salt with zinc stearate) from Milliken Chemicals, Spartanburg, S.C.

Non-limiting examples of fillers include, but are not limited to, clays, precipitated silica and silicates, fumed silica, metal sulfides and sulfates such as molybdenum disulfide and barium sulfate, metal borates such as barium borate and zinc borate, metal anhydrides such as aluminum anhydride, ground minerals, and elastomeric polymers such as ethylene-propylene-diene monomer rubber ("EPDM") and ethylene-propylene rubber ("EPR"). If present, fillers are generally added in conventional amounts, e.g., from 5 wt% or less to 50 wt% or more based on the total weight of the polymeric composition.

### Foamed Polymeric Composition

A foamed polymeric composition can be prepared from the above-described foamable polymeric composition by first reacting the LLDPE and peroxide to thereby form a peroxide-modified LLDPE. The resulting peroxide-modified LLDPE can then be subjected to a foaming process using the above-described blowing agent to form a foamed polymeric compositions.

Reacting the peroxide with the LLDPE can be performed via any conventional or hereafter-discovered processes in the art. Reaction of the LLDPE and peroxide can be performed at elevated temperature (e.g., 200 °C). In various embodiments, the peroxide can be reacted with the LLDPE using reactive extrusion. Alternatively, the LLDPE and peroxide can be melt mixed or melt compounded using conventional techniques. In various embodiments, the resulting peroxide-modified LLDPE can be a thermoplastic. In additional embodiments, the resulting peroxide-modified LLDPE can have a gel content that is undetectable using ASTM D2765.

Any foaming process known or hereafter discovered in the art can be used to form a foam from the peroxide-modified LLDPE. In an exemplary embodiment, after the peroxide-modified LLDPE has been formed, a blowing agent can be added into the molten reaction mixture. If formation of the peroxide-modified LLDPE is performed at elevated temperatures (e.g., 200 °C), the reaction mixture's temperature can be lowered (e.g., to 130 °C) before addition of the blowing agent. Following blowing agent addition, the reaction mixture can be melt blended for an additional time period. At a desired time, foaming of the polymeric composition can be accomplished by increasing the temperature of the foamable polymeric composition above the decomposition temperature of the selected blowing agent. For instance, when forming a cable coating, extrusion of the foamable polymeric composition is performed at elevated temperature, which can initiate the foaming process.

The resulting foamed polymeric composition can have a foaming level of less than 20, less than 18, or less than 16 percent, measured by comparing the densities of the neat LLDPE with the foamed polymeric composition as described in the Test Methods section, below. In various embodiments, the foaming level of the foamed polymeric composition can be at least 5, at least 8, at least 10, or at least 12 percent. Additionally, the foamed polymeric composition can be thermoplastic. Furthermore, the foamed polymeric composition can have undetectable gel content according to ASTM D2765.

In various embodiments, the foamed polymeric composition can have an improved elongation at break as compared to a foamed LLDPE composition that is identical but employs an LLDPE that was not modified with a peroxide. In one or more embodiments, the foamed polymeric composition has an elongation at break that is at least 300 percent, at least 400 percent, or at least 500 percent greater than an identical second foamed polymeric composition, except that the second foamed polymeric composition is prepared with an LLDPE that was not modified with a peroxide. In various embodiments, the improvement in elongation at break can be less than 1,000 percent, less than 800 percent, or less than 600 percent.

### Articles of Manufacture

In an embodiment, the foamable or foamed polymeric composition of this invention can be applied to a cable, a wire, or a conductor as a sheath or insulation layer in known amounts and by known methods, for example, with the equipment and methods described in USP 5,246,783, USP 6,714,707, USP 6,496,629 and USPA 2006/0045439. Typically, the foamed polymeric composition can be prepared in a reactor-extruder equipped with a cable-coating die and, after the components of the composition are formulated, the composition is extruded over the cable or conductor as the cable or conductor is drawn through the die. As noted above, foaming of the polymeric composition can be performed at the time of extrusion over the cable or conductor. In such embodiments, extrusion can be performed at a temperature greater than the activation temperature of the blowing agent.

Other articles of manufacture that can be prepared from the foamed polymer compositions of this invention include fibers, ribbons, sheets, tapes, tubes, pipes, weather-stripping, seals, gaskets, hoses, foams, footwear bellows, bottles, and films. These articles can be manufactured using known equipment and techniques.

### DEFINITIONS

As used herein, the term "and/or," when used in a list of two or more items, means that any one of the listed items can be employed by itself or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

"Wire" means a single strand of conductive metal, e.g., copper or aluminum, or a single strand of optical fiber.

"Cable" and "power cable" mean at least one wire or optical fiber within a sheath, e.g., an insulation covering or a protective outer jacket. Typically, a cable is two or more wires or optical fibers bound together, typically in a common insulation covering and/or protective jacket. The individual wires or fibers inside the sheath may be bare, covered or insulated. Combination cables may contain both electrical wires and optical fibers. The cable can be designed for low, medium, and/or high voltage applications. Typical cable designs are illustrated in USP 5,246,783, 6,496,629 and 6,714,707.

"Conductor" denotes one or more wire(s) or fiber(s) for conducting heat, light, and/or electricity. The conductor may be a single-wire/fiber or a multi-wire/fiber and may be in strand form or in tubular form. Non-limiting examples of suitable conductors include metals such as silver, gold, copper, carbon, and aluminum. The conductor may also be optical fiber made from either glass or plastic.

"Polymer" means a macromolecular compound prepared by reacting (i.e., polymerizing) monomers of the same or different type. "Polymer" includes homopolymers and interpolymers.

"Interpolymer" means a polymer prepared by the polymerization of at least two different monomers. This generic term includes copolymers, usually employed to refer to polymers prepared from two different monomers, and polymers prepared from more than two different monomers, e.g., terpolymers (three different monomers), tetrapolymers (four different monomers), etc.

### TEST METHODS

### Density

Density is determined according to ASTM D792.

### Melt Index

Melt index, or I₂, is measured in accordance by ASTM D1238, condition 190 °C / 2.16 kg, and is reported in grams eluted per 10 minutes.

### Tensile Strength and Elongation at Break

Tensile strength and elongation testing is conducted on an Instron ReNew 4201 65/16 apparatus in accordance with ASTM D638. Testing is carried out using a 20-inch-per-minute jaw separation speed. Average values of tensile and elongation are reported.

### Foaming Percentage

Measure the percentage of foaming according to the following method. The foamed jacket is stripped from the wire and its density is measured per ASTM D792. The foaming percentage is calculated as the percentage loss of density compared to the neat resin (i.e., an unfoamed and non-peroxide-modified resin), as described in the Materials section, below.

### Gel Content

Measure gel content according to ASTM D2765.

### MATERIALS

The following materials are employed in the Examples, below.

The linear low-density polyethylene ("LLDPE") is a gas-phase, unimodal LLDPE having a 1-butene comonomer content of 6.6 wt %, a density of 0.920 g/cm³, and a melt index (I₂) of 0.57 g/10 min. The LLDPE is produced by The Dow Chemical Company, Midland, MI, USA.

The low-density polyethylene ("LDPE") has a density of 0.9205 and a melt index (I₂) of 0.2 g/10 min. The LDPE is produced by The Dow Chemical Company, Midland, MI, USA.

The medium-density polyethylene ("MDPE") is a gas-phase, unimodal MDPE having a density of 0.935 g/cm³ and a melt index (I₂) of 0.8 g/10 min. The MDPE is produced by The Dow Chemical Company, Midland, MI, USA.

The high-density polyethylene ("HDPE") has a density of 0.944 g/cm³ and a melt index (I₂) of 0.97 g/10 min. The HDPE is produced by The Dow Chemical Company, Midland, MI, USA.

TRIGONOX™ 101 is an organic peroxide having the chemical name 2,5-dimethyl-2,5-di(tert-butylperoxy)hexane, which is commercially available from Akzo Nobel N.V., Amsterdam, Netherlands.

The blowing agent is a masterbatch that contains 50 wt% azodicarbonamide mixed in an LLDPE base resin. The LLDPE used in the blowing agent masterbatch has a density of 0.924 g/cm³ and a melt index of 20 g/10 min. The blowing agent masterbatch is produced by The Dow Chemical Company, Midland, MI, USA.

### EXAMPLES

### Preparation Method

In each of the examples that follow, extruded wire samples are prepared according to the following method. First, resin batches are prepared using a Brabender model Prep Mixer/Measuring Head laboratory electric batch mixer equipped with cam blades. The Prep-Mixer® is a 3-piece design consisting of two heating zones with a capacity of 350/420 mL depending on mixer-blade configuration. The formulations mixed per batch are detailed in the Composition Tables (Tables 1, 3, and 5), below.

Each compound is made by first adding the polyethylene to the mixing bowl at 180 °C. The polyethylene is allowed to melt for about 10 minutes. The peroxide is then added to the mixing bowl and allowed to react for 12 minutes. The temperature is then lowered to 130 °C (below the activation temperature of the blowing agent) and the blowing agent is added in. The mixing bowl is then fluxed for another 5 minutes. Once the mixing is completed, the molten material is backed out of the mixer using tweezers and collected. The molten material is then placed between two MYLAR™ sheets and compression molded at room temperature and 176 kg/cm² (2500 psi) pressure into a flat pancake, then cut into small pieces (approximately 0.5 cm x 0.5 cm) for wireline extrusion.

Wire samples are then prepared in a laboratory-scale, 1-inch extruder equipped with a cable-coating die. The compounds are extruded over a conductor (14 AWG (1.6265 mm) copper wire) as the conductor is drawn through the die, with a target wall thickness of 0.762 mm. The temperature profile in the extruder is 180 °C, 190 °C, 200 °C and 190 °C in zones 1, 2, 3, and 4 respectively.

The wire samples are then prepared for tensile strength and elongation testing by cutting 6-inch pieces of wire and removing the conductor from the test sample. Following removal of the conductor, the test samples are conditioned for 48 hours in a controlled environment at 23°C ± 15.8°C (73.4 °F) (+/- 3.6 °F)) with 50 % (+/- 5 %) relative humidity.

### Example 1 (Comparative) - Peroxide-modified LDPE, MDPE, and HDPE Foams

Prepare six Comparative Samples (CS1-CS6) using the preparation method described above and the formulations provided in Table 1, below.

**Table 1 - Compositions of CS1-CS6**

| | **CS1** | **CS2** | **CS3** | **CS4** | **CS5** | **CS6** |
|---|---|---|---|---|---|---|
| **LDPE (wt%)** | 99.5 | 99.45 | - | - | - | - |
| **MDPE (wt%)** | - | - | 99.5 | 99.45 | - | - |
| **HDPE (wt%)** | - | - | - | - | 99.5 | 99.45 |
| **TRIGONOX™ 101 (peroxide) (wt%)** | - | 0.05 | - | 0.05 | - | 0.05 |
| **Blowing agent masterbatch (wt%)** | 0.5 | 0.5 | 0.5 | 0.5 | 0.5 | 0.5 |
| **Total:** | 100 | 100 | 100 | 100 | 100 | 100 |

Analyze each of CS1-CS6 for tensile strength, elongation at break, foaming percentage, and density according to the Test Methods provided above. Results are provided in Table 2, below.

**Table 2 - Properties of CS1-CS6**

| | **CS1** | **CS2** | **CS3** | **CS4** | **CS5** | **CS6** |
|---|---|---|---|---|---|---|
| **Tensile Strength (psi)** | 1330 | 2206 | 1894 | 2681 | 2038 | 2808 |
| **Tensile Strength Std. Dev.** | 73 | 52 | 55 | 104 | 56 | 48 |
| **Δ TS with peroxide (%)** | N/A | 66 | N/A | 42 | N/A | 38 |
| **Elongation at Break (%)** | 434 | 343 | 75 | 367 | 16 | 56 |
| **Elongation Std. Dev.** | 16 | 10 | 59 | 38 | 6 | 14 |
| **Δ Elongation with peroxide (%)** | N/A | -21 | N/A | 389 | N/A | 250 |
| **Density (g/cm³)** | 0.819 | 0.870 | 0.766 | 0.921 | 0.916 | 0.905 |
| **Foaming (%)** | 11 | 5 | 18 | 2 | 2 | 3 |

### Example 2 (Comparative) - Unmodified LLDPE Foam

Prepare an unmodified LLDPE foamed sample (Comparative Sample CS8) according to the preparation method described above and the formulation provided in Table 3, below. Comparative Sample CS7 is a neat, unfoamed LLDPE.

**Table 3 - Compositions of CS7 and CS8**

| | **CS7** | **CS8** |
|---|---|---|
| **LLDPE (wt%)** | 100 | 99.5 |
| **Blowing agent masterbatch (wt%)** | - | 0.5 |
| **Total:** | 100 | 100 |

Analyze each of CS7 and CS8 for tensile strength, elongation at break, foaming percentage (if applicable), and density according to the Test Methods provided above. Results are provided in Table 4, below.

**Table 4 - Properties of CS7 and CS8**

| | **CS7** | **CS8** |
|---|---|---|
| **Tensile Strength (psi)** | 2077 | 1413 |
| **Tensile Strength Std. Dev.** | 131 | 12 |
| **Elongation at Break (%)** | 533 | 79 |
| **Elongation Std. Dev.** | 54 | 31 |
| **Density (g/cm³)** | 0.920 | 0.785 |
| **Foaming (%)** | N/A | 15 |

### Example 3 - Peroxide-modified LLDPE Foam

Prepare six Samples (S1-S6) and one Comparative Sample (CS9) using the preparation method described above and the formulations provided in Table 5, below.

**Table 5 - Compositions of S1-S6 and CS9**

| | **S1** | **S2** | **S3** | **CS9** | **S4** | **S5** | **S6** |
|---|---|---|---|---|---|---|---|
| **LLDPE (wt%)** | 99.45 | 99.4 | 99.3 | 99 | 99.75 | 99.2 | 98.45 |
| **TRIGONOX^{TM} 101 (peroxide) (wt%)** | 0.05 | 0.1 | 0.2 | 0.5 | 0.05 | 0.05 | 0.05 |
| **Blowing agent masterbatch (wt%)** | 0.5 | 0.5 | 0.5 | 0.5 | 0.2 | 0.75 | 1.5 |
| **Total:** | 100 | 100 | 100 | 100 | 100 | 100 | 100 |

Analyze each of S1-S6 for tensile strength, elongation at break, foaming percentage, and density according to the Test Methods provided above. Results are provided in Table 6, below. Comparative Sample CS9 is not analyzed because it cured too much, presumably due to its higher peroxide content.

**Table 6 - Properties of S1-S6 and CS9**

| | **S1** | S2 | S3 | CS9 | S4 | S5 | S6 |
|---|---|---|---|---|---|---|---|
| **Tensile Strength (psi)** | 2260 | 2286 | 1889 | NM^{†} | 2566 | 2220 | 1738 |
| **Tensile Strength Std. Dev.** | 133 | 49 | 54 | NM | 273 | 87 | 16 |
| **Δ TS with peroxide (%) (cf. CS8)** | 60 | 62 | 34 | NM | 82 | 57 | 23 |
| **Elongation at Break (%)** | 530 | 476 | 267 | NM | 504 | 519 | 347 |
| **Elongation Std. Dev.** | 34 | 19 | 8 | NM | 49 | 18 | 15 |
| **Δ Elong.with peroxide (%) (cf. CS8)** | 571 | 502 | 234 | NM | 538 | 557 | 339 |
| **Density (g/cm³)** | 0.805 | - | - | NM | 0.913 | 0.813 | 0.660 |
| **Foaming (%)** | 13 | - | - | NM | 1 | 12 | 28 |
| **Gel Content (%)** | ND | ND | ND | NM | ND | ND | ND |

| | | | | | | | |
|---|---|---|---|---|---|---|---|
| * None detected ^{†} This sample cured too extensively. Properties are not measured. | | | | | | | |

As can be seen from the results provided in Table 6, above, each of Samples S1-S6 provide marked improvement in elongation over the LLDPE sample prepared without the use of peroxide modification (CS8). Additionally, comparing the data in Table 6 to the data in Table 2, it can be seen that peroxide modification of LLDPE is surprisingly more effective at improving elongation retention compared to other polyolefins (i.e., LDPE, MDPE, and HDPE).

## Claims

1. A cable composition, comprising:
a conductive core, and
a polymeric coating surrounding at least a portion of said conductive core,
wherein said polymeric coating comprises at least a portion of a foamed polymeric composition obtainable by foaming a foamable polymeric composition wherein the foamable polymeric composition, comprises:
a peroxide-modified linear low-density polyethylene comprising the reaction product of a peroxide and a linear low-density polyethylene;
wherein the linear low-density polyethylene has a density ranging from 0.916 to 0.925 g/cm³;
wherein the density is determined according to ASTM D792; and
a blowing agent,
wherein said peroxide-modified linear low-density polyethylene is thermoplastic;
wherein the peroxide is present in the foamable composition in an amount ranging from greater than 0 to less than 0.5 wt% based on the combined weight of the linear low-density polyethylene, the peroxide and the blowing agent.

2. The cable composition of claim 1, wherein said blowing agent is present in an amount ranging from greater than 0 to less than 1.5 weight percent based on the combined weight of said linear low-density polyethylene, said peroxide, and said blowing agent.

3. The cable composition of claim 1, wherein said peroxide is present in a mole ratio ranging from 0.013 to 0.427, based on the combined amount of said linear low-density polyethylene and said peroxide.

4. The cable composition of claim 1, wherein said peroxide-modified linear low-density polyethylene has no detectable gel content according to ASTM D2765.

5. The cable composition of claim 1 or claim 2, wherein the linear low-density polyethylene has a melt index (I₂) in the range of from 0.1 to 20 g/10 min, wherein the melt index (I₂) is determined according to ASTM method D1238..

6. A method for preparing a cable composition the method comprising:
(a) providing a conductive core;
(b) surrounding at least a portion of said conductive core with a polymeric coating,
wherein said polymeric coating comprises at least a portion of a foamed polymeric composition, wherein said foamed polymeric composition, is prepared by a method comprising:
(c) providing a peroxide-modified linear low-density polyethylene, wherein said peroxide-modified linear low-density polyethylene is the reaction product of a linear low-density polyethylene and a peroxide, and wherein said peroxide-modified linear low-density polyethylene is thermoplastic; and
(d) subjecting said peroxide-modified linear low-density polyethylene to a foaming process using a blowing agent to thereby form said foamed polymeric composition.

7. The method of claim 6, wherein said peroxide is present in an amount ranging from greater than 0 to less than 0.5 weight percent based on the combined weight of said linear low-density polyethylene, said peroxide, and said blowing agent, wherein said blowing agent is present in an amount ranging from greater than 0 to less than 1.5 weight percent based on the combined weight of said linear low-density polyethylene, said peroxide, and said blowing agent.

8. The method of either claim 6 or 7, wherein said foamed polymeric composition has a foaming level of less than 20 percent.

9. The method of any one of claims 6-8, wherein said foamed polymeric composition is thermoplastic, wherein said foamed polymeric composition has an elongation at break that is at least 300% greater than an identical second foamed polymeric composition, except that said second foamed polymeric composition is prepared with a non-peroxide-modified linear low-density polyethylene .

10. The method of any one of claims 6-9, wherein the reaction between said linear low-density polyethylene and said peroxide to form said peroxide-modified linear low-density polyethylene is performed by reactive extrusion.

## Patentansprüche

1. Eine Kabelzusammensetzung, die Folgendes beinhaltet:
einen leitfähigen Kern und
eine Polymerbeschichtung, die mindestens einen Teil des leitfähigen Kerns umgibt,
wobei die Polymerbeschichtung mindestens zum Teil eine geschäumte Polymerzusammensetzung, die durch Schäumen einer schäumbaren Polymerzusammensetzung erhältlich ist, beinhaltet, wobei die schäumbare Polymerzusammensetzung Folgendes beinhaltet:
ein mit Peroxid modifiziertes, lineares Polyethylen niederer Dichte, das das Reaktionsprodukt eines Peroxids und eines linearen Polyethylens niederer Dichte beinhaltet;
wobei das lineare Polyethylen niederer Dichte eine Dichte im Bereich von 0,916 bis 0,925 g/cm³ aufweist;
wobei die Dichte gemäß ASTM D792 bestimmt ist; und
ein Treibmittel,
wobei das mit Peroxid modifizierte, lineare Polyethylen niederer Dichte thermoplastisch ist;
wobei das Peroxid in der schäumbaren Zusammensetzung in einer Menge im Bereich von größer als 0 bis weniger als 0,5 Gew.-%, bezogen auf das Gesamtgewicht des linearen Polyethylens niederer Dichte, des Peroxids und des Treibmittels, vorhanden ist.

2. Kabelzusammensetzung gemäß Anspruch 1, wobei das Treibmittel in einer Menge im Bereich von größer als 0 bis weniger als 1,5 Gewichtsprozent, bezogen auf das Gesamtgewicht des linearen Polyethylens niederer Dichte, des Peroxids und des Treibmittels, vorhanden ist.

3. Kabelzusammensetzung gemäß Anspruch 1, wobei das Peroxid in einem Molverhältnis im Bereich von 0,013 bis 0,427, bezogen auf die Gesamtmenge des linearen Polyethylens niederer Dichte und des Peroxids, vorhanden ist.

4. Kabelzusammensetzung gemäß Anspruch 1, wobei das mit Peroxid modifizierte, lineare Polyethylen niederer Dichte keinen nachweisbaren Gelgehalt gemäß ASTM D2765 aufweist.

5. Kabelzusammensetzung gemäß Anspruch 1 oder Anspruch 2, wobei das lineare Polyethylen niederer Dichte einen Schmelzindex (l₂) im Bereich von 0,1 bis 20 g/10 min aufweist, wobei der Schmelzindex (l₂) gemäß dem Verfahren ASTM D1238 bestimmt ist.

6. Ein Verfahren zum Herstellen einer Kabelzusammensetzung, wobei das Verfahren Folgendes beinhaltet:
(a) Bereitstellen eines leitfähigen Kerns;
(b) Umgeben von mindestens einem Teil des leitfähigen Kerns mit einer Polymerbeschichtung, wobei die Polymerbeschichtung mindestens zum Teil eine geschäumte Polymerzusammensetzung beinhaltet, wobei die geschäumte Polymerzusammensetzung durch ein Verfahren hergestellt wird, das Folgendes beinhaltet:
(c) Bereitstellen eines mit Peroxid modifizierten, linearen Polyethylens niederer Dichte, wobei das mit Peroxid modifizierte, lineare Polyethylen niederer Dichte das Reaktionsprodukt eines linearen Polyethylens niederer Dichte und eines Peroxids ist und wobei das mit Peroxid modifizierte, lineare Polyethylen niederer Dichte thermoplastisch ist; und
(d) Unterziehen des mit Peroxid modifizierten, linearen Polyethylens niederer Dichte einem Schäumungsprozess unter Verwendung eines Treibmittels, um dadurch die geschäumte Polymerzusammensetzung zu bilden.

7. Verfahren gemäß Anspruch 6, wobei das Peroxid in einer Menge im Bereich von größer als 0 bis weniger als 0,5 Gewichtsprozent, bezogen auf das Gesamtgewicht des linearen Polyethylens niederer Dichte, des Peroxids und des Treibmittels, vorhanden ist, wobei das Treibmittel in einer Menge im Bereich von größer als 0 bis weniger als 1,5 Gewichtsprozent, bezogen auf das Gesamtgewicht des linearen Polyethylens niederer Dichte, des Peroxids und des Treibmittels, vorhanden ist.

8. Verfahren gemäß Anspruch 6 oder 7, wobei die geschäumte Polymerzusammensetzung einen Schäumungsgrad von weniger als 20 Prozent aufweist.

9. Verfahren gemäß einem der Ansprüche 6-8, wobei die geschäumte Polymerzusammensetzung thermoplastisch ist, wobei die geschäumte Polymerzusammensetzung eine Bruchdehnung aufweist, die mindestens 300 % größer als eine identische zweite geschäumte Polymerzusammensetzung ist, außer dass die zweite geschäumte Polymerzusammensetzung mit einem nicht mit Peroxid modifizierten, linearen Polyethylen niederer Dichte hergestellt ist.

10. Verfahren gemäß einem der Ansprüche 6-9, wobei die Reaktion zwischen dem linearen Polyethylen niederer Dichte und dem Peroxid zum Bilden des mit Peroxid modifizierten linearen Polyethylens niederer Dichte durch Reaktionsextrusion durchgeführt wird.

## Revendications

1. Une composition de câble, comprenant :
une âme conductrice, et
un revêtement polymère entourant au moins une portion de ladite âme conductrice,
dans laquelle ledit revêtement polymère comprend au moins une portion d'une composition polymère moussée pouvant être obtenue par moussage d'une composition polymère moussable dans laquelle la composition polymère moussable, comprend :
un polyéthylène basse densité linéaire modifié par un peroxyde comprenant le produit de réaction d'un peroxyde et d'un polyéthylène basse densité linéaire ;
dans laquelle le polyéthylène basse densité linéaire a une masse volumique allant de 0,916 à 0,925 g/cm³;
dans laquelle la masse volumique est déterminée conformément à l'ASTM D792 ; et
un agent d'expansion,
dans laquelle ledit polyéthylène basse densité linéaire modifié par un peroxyde est thermoplastique ;
dans laquelle le peroxyde est présent dans la composition moussable dans une quantité allant de plus de 0 à moins de 0,5 % en poids rapporté au poids combiné du polyéthylène basse densité linéaire, du peroxyde et de l'agent d'expansion.

2. La composition de câble de la revendication 1, dans laquelle ledit agent d'expansion est présent dans une quantité allant de plus de 0 à moins de 1,5 pour cent en poids rapporté au poids combiné dudit polyéthylène basse densité linéaire, dudit peroxyde, et dudit agent d'expansion.

3. La composition de câble de la revendication 1, dans laquelle ledit peroxyde est présent dans un rapport molaire allant de 0,013 à 0,427, rapporté à la quantité combinée dudit polyéthylène basse densité linéaire et dudit peroxyde.

4. La composition de câble de la revendication 1, dans laquelle ledit polyéthylène basse densité linéaire modifié par un peroxyde n'a pas de teneur en gel détectable conformément à l'ASTM D2765.

5. La composition de câble de la revendication 1 ou la revendication 2, dans laquelle le polyéthylène basse densité linéaire a un indice de fluidité à l'état fondu (l₂) compris dans la gamme allant de 0,1 à 20 g/10 min, dans laquelle l'indice de fluidité à l'état fondu (l₂) est déterminé conformément à la méthode ASTM D1238.

6. Un procédé pour préparer une composition de câble, le procédé comprenant :
(a) le fait de fournir une âme conductrice ;
(b) le fait d'entourer au moins une portion de ladite âme conductrice avec un revêtement polymère, dans lequel ledit revêtement polymère comprend au moins une portion d'une composition polymère moussée, dans lequel la composition polymère moussée, est préparée par un procédé comprenant :
(c) le fait de fournir un polyéthylène basse densité linéaire modifié par un peroxyde, dans lequel ledit polyéthylène basse densité linéaire modifié par un peroxyde est le produit de réaction d'un polyéthylène basse densité linéaire et d'un peroxyde, et dans lequel ledit polyéthylène basse densité linéaire modifié par un peroxyde est thermoplastique ; et
(d) le fait de soumettre ledit polyéthylène basse densité linéaire modifié par un peroxyde à un processus de moussage à l'aide d'un agent d'expansion afin de former ainsi ladite composition polymère moussée.

7. Le procédé de la revendication 6, dans lequel ledit peroxyde est présent dans une quantité allant de plus de 0 à moins de 0,5 pour cent en poids rapporté au poids combiné dudit polyéthylène basse densité linéaire, dudit peroxyde, et dudit agent d'expansion, dans lequel ledit agent d'expansion est présent dans une quantité allant de plus de 0 à moins de 1,5 pour cent en poids rapporté au poids combiné dudit polyéthylène basse densité linéaire, dudit peroxyde, et dudit agent d'expansion.

8. Le procédé de l'une ou l'autre de la revendication 6 ou de la revendication 7, dans lequel ladite composition polymère moussée a un niveau de moussage de moins de 20 pour cent.

9. Le procédé de n'importe laquelle des revendications 6 à 8, dans lequel ladite composition polymère moussée est thermoplastique, dans lequel ladite composition polymère moussée a un allongement à la rupture qui est au moins 300 % de plus que celui d'une deuxième composition polymère moussée identique, hormis que ladite deuxième composition polymère moussée est préparée avec un polyéthylène basse densité linéaire non modifié par un peroxyde.

10. Le procédé de n'importe laquelle des revendications 6 à 9, dans lequel la réaction entre ledit polyéthylène basse densité linéaire et ledit peroxyde afin de former ledit polyéthylène basse densité linéaire modifié par un peroxyde est réalisée par extrusion réactive.
